Europäisches Patentamt

European Patent Office

Office européen des brevets

(19)

(11) Publication number: **0 052 944**
**B1**

(12)
# EUROPEAN PATENT SPECIFICATION

(45) Date of publication of patent specification: **09.05.84**

(51) Int. Cl.³: **C 08 L 77/00** // C08K5/00

(21) Application number: **81305013.5**

(22) Date of filing: **23.10.81**

(54) Molding blends.

(30) Priority: **20.11.80 US 208548**

(43) Date of publication of application:
**02.06.82 Bulletin 82/22**

(45) Publication of the grant of the patent:
**09.05.84 Bulletin 84/19**

(84) Designated Contracting States:
**BE CH DE FR GB IT LI NL**

(56) References cited:

**ENCYCLOPEDIA OF POLYMER SCIENCE AND
TECHNOLOGY, vol. 10, J. Wiley and Sons, 1969,
NEW YORK (US), pages 421, 464, 465**

(73) Proprietor: **E.I. DU PONT DE NEMOURS AND
COMPANY
Legal Department 1007 Market Street
Wilmington Delaware 19898 (US)**

(72) Inventor: **Waggoner, Marion Glen
36 Sageway
Hockessin Delaware 19707 (US)**

(74) Representative: **Myerscough, Philip Boyd et al,
J.A.Kemp & Co. 14, South Square Gray's Inn
London, WC1R 5EU (GB)**

# 0 052 944

**Description**

Field of the Invention

This invention concerns polyamide molding resins, and more particularly polyamide molding resins that contain carbon black.

Background of the inventoin

Carbon black can be added to plastic molding resins to improve weathering resistance of articles molded from the resins. The carbon black acts to block or absorb ultraviolet rays. However, impact resistance and elongation are adversely affected by incorporation of carbon black into polyamide molding resins and it is desirable to treat polyamide/carbon black blends to overcome the deterioration in these properties.

Summary of the Invention

It has now been found that when nigrosine is employed with carbon black in a blend with a polyamide molding resin, the resulting molding blend produces molded articles having better impact resistance and greater elongation than a resin comprising carbon black and polyamide alone.

Specifically the molding blend of this invention comprises

a) at least one polyamide of film-forming molecular weight,

b) about 1—10 percent by weight of polyamide of carbon black, and

c) about 0.1—10 percent by weight of polyamide of nigrosine.

Description of the Invention

The polyamides useful herein are well known in the art. They are of film-forming molecular weight, i.e., have a number average molecular weight over 5000. The polyamide resin can be produced by condensation of equimolar amounts of a saturated organic dicarboxylic acid containing from 4—12 carbon atoms with an organic diamine containing 2—13 carbon atoms, in which the diamine can be employed, if desired, to provide an excess of amine end groups over carboxyl end groups in the polyamide. Vice versa, the diacid can be used to provide an excess of acid groups. Equally well, these polyamides may be made from acid-forming and amine-forming derivatives of said amines and acids such as esters, acid chlorides and amine salts. Representative dicarboxylic acids used to make the polyamides include adipic acid, pimelic acid, suberic acid, sebacic acid, and dodecanedioic acid, while representative diamines include hexamethylenediamine and octamethylenediamine. In addition, the polyamide can also be prepared from self-condensation of a lactam. Examples of polyamides include polyhexamethylene adipamide (66 nylon), polyhexamethylene azelaamide (69 nylon), polyhexamethylene sebacamide (610 nylon), and polyhexamethylene dodecanoamide (612 nylon), poly bis-(4-aminocyclohexyl)methane dodecanoamide, or the polyamides produced by ring opening of lactams; i.e., polycaprolactam, (6 nylon), polylauric lactam, or poly-11-aminoundecanoic acid. It is also possible to use polyamides prepared by the polymerization of at least two of the amines or acids used to prepare the above polymers, as for example, a polymer made of adipic acid, and isophthalic acid and hexamethylene diamine. Blends of polyamides, such as a mixture of 66 nylon and 6 nylon are also included. Preferably the condensation polyamide employed herein is polyhexamethylene adipamide (66 nylon), or a blend of polyhexamethylene adipamide (66 nylon) and polycaprolactam (6 nylon).

The carbon black can be present in an amount of about 1 to 10 percent by weight of polyamide and preferably 1—3 percent. The nigrosine can be present in an amount of about 0.1—10 percent by weight of polyamide and preferably 0.5—2 percent. Nigrosine is also known as aniline black. It is obtained by oxidation of aniline.

Preferably the carbon black and the nigrosine are employed in finely divided form. They can be premixed with a small amount of the polyamide or another polyamide taken from the group above. The premixing aids in dispersing the nigrosine in the final polyamide.

Both the carbon black and the nigrosine can be employed in any of their commercially available forms, as blending with the polyamide is carried out by melt blending techniques in an extruder. The blended material is usually cut into pellets as it is extruded.

The improved elongation and impact strength of articles molded from the blend described herein make the blend useful in applications where flexibility and strength are desirable, such as in cable ties for outdoor use.

In the Examples which follow, tensile strength and elongation measurements were made as described in ASTM D638—77a except that samples were not conditioned at 50% relative humidity but, rather, were tested dry as molded (DAM) after conditioning for 24 hours used nitrogen at 23°C.

Flexural modulus was measured as described in ASTM D790—71 except that 3 rather than 5 specimens were tested and conditioning was carried out for 24 hours under nitrogen at 23°C (DAM).

Notched Izod was measured by the procedure described in ASTM D256—73. Samples were tested dry as molded (DAM) after conditioning for 24 hours under nitrogen at 23°C.

The molding blends described in the examples were prepared by either obtaining a blend of 66 nylon (polyhexamethylene adipamide) having a number average molecular weight over 5000 which

2

contained 2 percent carbon black based on weight of polyamide with a premix of nigrosine material, or by blending the nylon with a premix of carbon black and premix of nigrosine material. The nigrosine material was composed of 30% nigrosine and 70% 66 nylon. This mixture was then melt blended at temperatures 5° to 100°C above the polyamide melting point, preferably 320°C or below, by extruding it through a Werner and Pfleiderer extruder, 28 mm ZSK twin screw, in combination with an in-line quench tank and strand cutter, to obtain cut pellets of the mixture. The pellets were then vacuum dried overnight at 80°C prior to molding. Test bars as required in the tests listed above were molded in 6 oz. injection molding machines at melt temperatures 5° to 10°C above the melting point of the polyamide matrix. The mold temperature was about 90°C with fast injection and a 20 sec/20 sec ram forward/hold cycle.

Control 1 and Example 1

The 66 nylon/carbon black blend described in the preceding paragraph was extruded and molded as described above to make Control 1 product. Test data are shown in Table 1 below.

The 66 nylon/carbon black blend described in the preceding paragraph was cube blended with the nigrosine material in the ratio 97.5% 66 nylon/carbon black mixture and 2.5% nigrosine material. The resulting blend was extruded to make the product of Example 1, molded, and tested as described above. Results are shown in Table 1.

Compared with Control 1, the blend of Example 1 exhibited over a 4-fold increase in elongation and a 33% increase in notched Izod values. Notched Izod is a measure of impact resistance.

Control 2 and Example 2

66 nylon was cube blended with a concentrate of 20% carbon black in 6 nylon. The blend contained 90% 66 nylon and 10% of the concentrate. The blend was extruded and pelletized, then molded and tested as described above to make Control 2 Product. Results are as shown in Table 1.

A blend of 66 nylon, the carbon black concentrate of Control 2 and the nigrosine material of Example 1 was prepared in an 87.5%/10%/2.5% ratio. The blend was extruded, pelletized, molded and tested as described above. Results are shown in Table 1, and show improved elongation and notched Izod values over those of Control 2.

Examples 3, 4 and 5A, 5B and 5C and Controls 3, 4 and 5

The blends of 66 nylon, carbon black concentrate, and nigrosine material shown in Table 1 were prepared, extruded, pelletized, molded and tested as described above from Example 2. Results are shown in Table 1.

Control 6 and Example 6

A blend of 6 nylon and carbon black was prepared as described in Control 2, using the ingredients and amounts shown in Table 1 for Control 6; and was then extruded, molded and tested, with the results being shown in Table 1 for Control 6.

A blend of 6 nylon, carbon black and nigrosine was prepared as described in Example 2 using the ingredients and amounts shown in Table 1 for Example 6; and was then extruded, molded and tested, with the results being shown in Table 1 for Example 6.

Control 7 and Example 7

A blend of 612 nylon and carbon black was prepared as described in Control 2 using the ingredients and amounts shown in Table 1 for control 7; and was then extruded, molded and tested, with the results being shown in Table 1 for Control 7.

A blend of 612 nylon, carbon black and nigrosine was prepared as described in Example 2 using the ingredients and amounts shown in Table 1 for Example 7; and was then extruded, molded and tested, with the results being shown in Table 1 for Example 7.

## TABLE 1

| Experiment | Nylon Base Resin | Carbon Black Concentration | Nigrosine Concentration | Tensile Strength | | Elongation % | | Flexural Modulus | | Notched Izod |
| | | | | (psi) | (MPa) | Average | Range | (psi) | (MPa) | (ft-lb/in or 0.305m-0.45 kg/2.54cm) |
| --- | --- | --- | --- | --- | --- | --- | --- | --- | --- | --- |
| Control 1 | 66 nylon | 2.0 as received | 0.0 | 12900 | 88.9 | 4 | 4.0—4.5 | 446000 | 3075 | 0.6 |
| Example 1 | 66 nylon | 2.0 as received | 0.7[3] | 12600 | 86.9 | 17 | 4—26 | 455000 | 3140 | 0.8 |
| Control 2 | 66 nylon | 2.0[1] | 0.0 | 13100 | 90.3 | 28 | 25—34 | 446000 | 3075 | 0.6 |
| Example 2 | 66 nylon | 2.0[1] | 0.7[3] | 12200 | 84.1 | 56 | 45—66 | 442000 | 3050 | 0.8 |
| Control 3 | 66 nylon | 2.0[1] | 0.0 | 12800 | 88.2 | 38 | 35—41 | 444000 | 3060 | 0.6 |
| Example 3 | 66 nylon | 2.0[1] | 0.7[3] | 12400 | 85.5 | 38 | 31—46 | 437000 | 3010 | 0.9 |
| Control 4 | 66 nylon | 2.0[2] | 0.0 | 12900 | 88.9 | 26 | 21—30 | 455000 | 3140 | 0.6 |
| Example 4 | 66 nylon | 2.0[2] | 0.7[3] | 12500 | 86.2 | 34 | 25—37 | 460000 | 3170 | 0.8 |
| Control 5 | 66 nylon | 2.0[1] | 0.0 | 12930 | 89.15 | 17 | 16—22 | 463000 | 3190 | 0.8 |
| Example 5A | 66 nylon | 2.0[1] | 0.10[3] | 12220 | 84.25 | 27 | 16—32 | 456000 | 3145 | 1.0 |
| Example 5B | 66 nylon | 2.0[1] | 0.40[3] | 12240 | 84.39 | 24 | 21—31 | 447000 | 3080 | 1.0 |
| Example 5C | 66 nylon | 2.0[1] | 2.0[3] | 12190 | 84.05 | 27 | 23—32 | 451000 | 3110 | 0.9 |
| Control 6 | 6 nylon | 2.0[1] | 0.0 | 12300 | 84.8 | 48 | 38—52 | 440000 | 3030 | 0.8 |
| Example 6 | 6 nylon | 2.0[1] | 0.7[3] | 11800 | 81.4 | 72 | 64—98 | 415000 | 2860 | 1.3 |
| Control 7 | 612 nylon | 2.0[1] | 0.0 | 10400 | 71.7 | 38 | 34—43 | 386000 | 2660 | 0.8 |
| Example 7 | 612 nylon | 2.0[1] | 0.7[3] | 9950 | 68.6 | 51 | 48—53 | 367000 | 2530 | 0.8 |

[1] 20% carbon black in 6 nylon

[2] 22% carbon black in 66 nylon

[3] 30% nigrosine in 70% 66 nylon

## Claims

1. A molding blend comprising at least one polyamide of film-forming molecular weight and carbon black, characterised by containing 1 to 10 percent by weight of polyamide of carbon black, and 0.1—10 percent by weight of polyamide of nigrosine.

2. A molding blend according to claim 1 in which the polyamide is 66 nylon.

3. A molding blend according to claim 1 in which the polyamide is 6 nylon.

4. A molding blend according to claim 1 in which the polyamide is 612 nylon.

5. Articles molded from a blend as claimed in any one of the preceding claims.

## Revendications

1. Un mélange à mouler comprenant au moins un polyamide de poids moléculaire filmogène et du noir de carbone, caractérisé en ce qu'il contient 1 à 10 pour cent en poids, par rapport au polyamide, de noir de carbone, et 0,1 à 10 pour cent en poids, par rapport au polyamide, de nigrosine.

2. Un mélange à mouler selon la revendication 1, dans lequel le polyamide est du nylon 66.

3. Un mélange à mouler selon la revendication 1, dans lequel le polyamide est du nylon 6.

4. Un mélange à mouler selon la revendication 1, dans lequel le polyamide est du nylon 612.

5. Articles moulés à partir d'un mélange selon l'une quelconque des revendications précédentes.

## Patentansprüche

1. Formmasse, enthaltend mindestens ein Polyamid mit film-bildendem Molekulargewicht und Ruß, dadurch gekennzeichnet, daß sie 1 bis 10% des Gewichts des Polyamids an Ruß und 0,1—10% des Gewichts des Polyamids an Nigrosin enthält.

2. Formmasse nach Anspruch 1, in der das Polyamid Nylon 66 ist.

3. Formmasse nach Anspruch 1, in der das Polyamid Nylon 6 ist.

4. Formmasse nach Anspruch 1, in der das Polyamid Nylon 612 ist.

5. Gegenstände, geformt aus einer Masse, wie in einem der vorhergehenden Ansprüche beansprucht.